# EUROPEAN PATENT SPECIFICATION

(11) **EP 3 942 183 B1**
(45) Date of publication and mention of the grant of the patent: **11.11.2026**
(21) Application number: 19828944.9
(22) Date of filing: 05.12.2019
(51) Int. Cl.: F04C 18/16, F04C 27/00, F01C 19/12

(54) **SEAL ASSEMBLY FOR HIGH PRESSURE SINGLE SCREW COMPRESSOR**
DICHTUNGSANORDNUNG FÜR EINEN HOCHDRUCKSCHRAUBENVERDICHTER
ENSEMBLE JOINT D'ÉTANCHÉITÉ POUR COMPRESSEUR À VIS UNIQUE HAUTE PRESSION

(30) Priority: 22.03.2019 US 201962822245 P; 28.10.2019 US 201916665439
(43) Date of publication of application: 26.01.2022
(73) Proprietor: Copeland Industrial LP, St. Louis, MO 63136 (US)
(72) Inventor: PANDE, Abhijit, Pune 411051 (IN); NARKHEDE, Pallavi, Pune 412101 (IN); FELS, Steven, West Allis, WI 53219 (US); PICOUET, Jean-louis, Waukesha, WI 53189 (US)
(74) Representative: Murgitroyd & Company
(86) International application number: PCT/US2019/064632
(87) International publication number: WO 2020/197598

(56) References cited:
- WO-A1-2018/042197
- WO-A1-2018/052463
- JP-A- 2017 036 816
- US-A1- 2008 084 030
- US-A1- 2019 010 944
- US-B1- 6 186 758
- US-B1- 7 025 356

## Description

### FIELD OF THE INVENTION

The present invention relates generally to single screw compressors. In one aspect, the present invention relates to a seal between the discharge (high pressure) of high pressure single screw compressors and the suction (low pressure) of such compressors.

### BACKGROUND OF THE INVENTION

Single screw compressors are used, for example, in compression systems, such as refrigeration systems, to compress a gas, such as refrigerant gas, for example "Freon," ammonia, natural gas, or the like. A compressor generally uses a drive source to output compressed gas. Screw compressors, specifically, employ a housing in which a motor-driven main rotor having helical grooves thereon meshes with rotors on opposite sides of the main rotor to define gas compression chambers. It will be appreciated that a pressure differential is thereby created between a suction end cavity (lower pressure) and a discharge end cavity (higher pressure). A high suction pressure thrust load balance assembly configured for use with a single screw compressor comprising a sealing baffle keyed to a main rotor drive shaft is known from WO2018/052463A1.

WO2018/042197A1 relates to a rotary piston and cylinder device comprising a rotor and a stator and a rotatable shutter. Sealing devices are further known from US 7025356 B1 or JP2017/036816A. For instance, JP2017/036816A relates to a sealing device for a bearing housing in which a self-aligning rolling bearing or the like is disposed inside a general industrial machine. US 6 186 758 B1 relates to multi-screw compressors with liquid injection. US 2019/010944 A1 refers to a climate-control system in which a compressor is installed. From US 2008/084030 A1 a segmented air floating seal assembly is known being used in a gas turbine engine to seal a rotary shaft.

Standard single screw compressors operate at discharge pressures up to 24132 hPa (350psi), while high pressure single screw compressors operate at discharge pressures greater than 24132 hPa (350psi) and up to 103 423 hPa (1500psi). It will be appreciated that the design of various components may differ between a standard single screw compressor and those operating at high pressures. For example, high pressure single screw compressors experience a greater pressure differential between the suction end cavity and the discharge end cavity. The seal between the discharge cavity of a high pressure screw compressor and the suction cavity of a high pressure screw compressor must therefore accommodate the greater pressure differential than the seal for a standard single screw compressor.

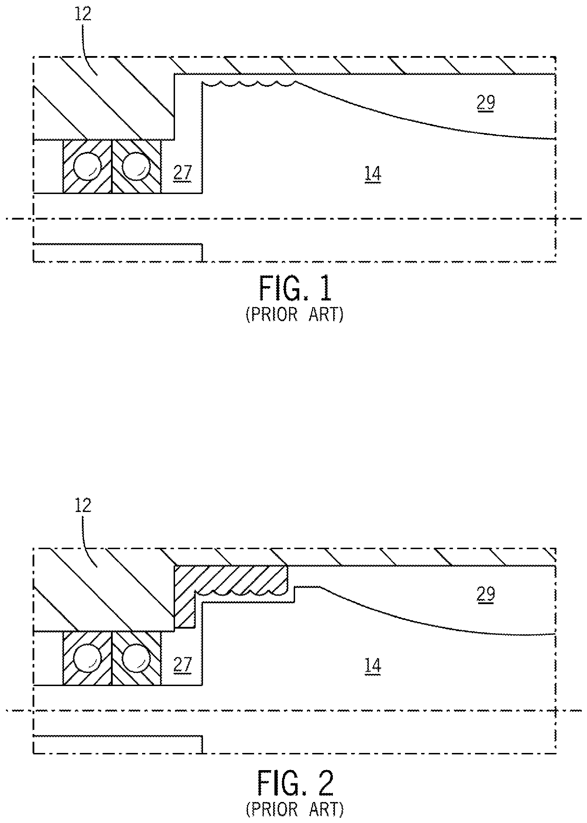

Existing seals between the discharge and suction cavities can be machined directly to the rotor, as shown in PRIOR ART FIG. 1. In this case, the seal itself rotates with the main rotor. Alternatively, existing seals are provided as a separate part secured to the inside of the compressor housing, as shown in PRIOR ART FIG. 2. In these cases, the efficiency of the seal depends on the clearance which can be obtained between either the seal and the housing wall or rotor and the seal. The greater the distance, the less efficient the seal. The efficiency of the seal is also dependent on the amount of wear on the seal over time.

With respect to the seal shown in PRIOR ART FIG. 1, the clearance between the housing and the seal on the rotor cannot be significantly optimized because both the housing and the rotor are metal. That is, metal does not wear as readily as other materials and damage to the housing and/or rotor may occur if the clearance between the housing and the rotor is not sufficient. In contrast, when the seal is provided on the housing wall, it will be appreciated that two different seal surfaces are needed and optimizing the clearance can be difficult.

Accordingly, a need exists for a seal assembly for high pressure single screw compressors which addresses one or more of the above deficiencies or other problems.

### SUMMARY OF THE INVENTION

The present invention relates to a high pressure single screw compressor as defined in claim 1. The high pressure single screw compressor comprises a housing, a main rotor that is secured within the housing and rotatably driven by a main rotor drive shaft about a main rotor drive shaft axis, and operably engaged with a plurality of gate rotors that are also secured within the housing; a suction end cavity having a first pressure; a discharge cavity having a second pressure, wherein the discharge cavity is formed with the main rotor and the compressor housing, the second pressure of the discharge cavity is a result of the compression of gases by the high pressure single screw compressor, and the first pressure is less than the second pressure; and a seal assembly including a seal body having a textured outer surface, the seal body being disposed around substantially an entirety of a circumference of the main rotor, and at least one attachment structure which fixedly attaches the seal body to, so as to be rotatable along with, the main rotor, the seal body is provided between the suction end cavity and the discharge cavity, wherein a difference in pressure between the suction end cavity and the discharge cavity is greater than or equal to 41369 hPa (600 psi), and wherein the seal body is made of a thermoplastic or thermoset material; wherein the textured outer surface creates a labyrinthine path from the suction end cavity to the discharge cavity between the compressor housing and the main rotor.

Other embodiments, aspects, features, objectives and advantages of the seal assembly in accordance with embodiments of the present disclosure will be understood and appreciated upon a full reading of the detailed description and the claims that follow.

### DESCRIPTION OF THE DRAWINGS

Features of the present disclosure, which are believed to be novel, are set forth with particularity in the appended claims. Embodiments of the disclosure are described with reference to the accompanying drawings and are for illustrative purposes only. The disclosure is not limited in its application to the details of construction or the arrangement of the components illustrated in the drawings. The seal assembly of the present disclosure is capable of other embodiments or of being practiced or carri ed out in other various ways. Like reference numerals are used to indicate like components. In the drawings:
FIG. 1 illustrates a prior art example of a seal for a high pressure single screw compressor;
FIG. 2 illustrates a further prior art example of a seal for a high pressure single screw compressor;
FIG. 3 is a top view, partly in cross-section and with portions broken away, of an exemplary high pressure single screw compressor employing a single screw rotor and a pair of star or gate rotors in accordance with embodiments of the present disclosure; and
FIG. 4 is a schematic illustration of a portion of the high pressure single screw compressor of FIG. 3 which shows the seal assembly in further detail in accordance with embodiments of the present disclosure.

### DETAILED DESCRIPTION OF PREFERRED EMBODIMENTS

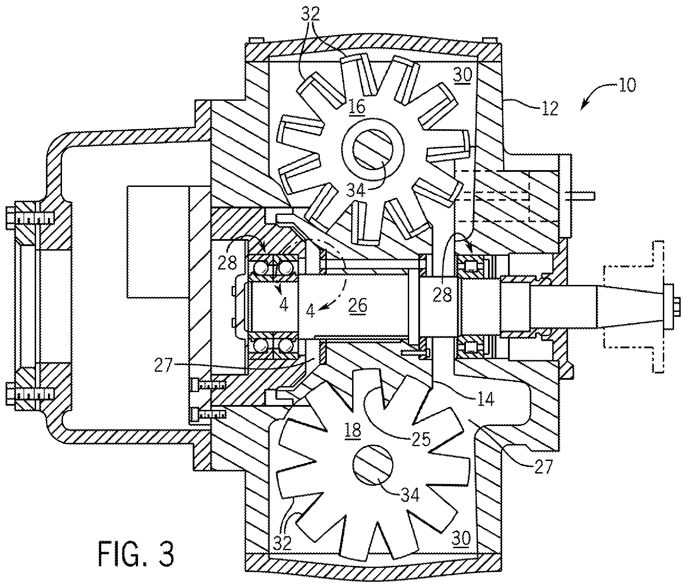

Referring to FIG. 3, numeral **10** designates an exemplary embodiment of a single screw compressor adapted for use in a compression system, such as a refrigeration system (not shown), or the like, and which may include a seal assembly 100 (not shown) in accordance with embodiments of the present disclosure. The single screw compressor **10** generally comprises a compressor housing **12,** a single main rotor **14** mounted for rotation in the housing **12,** and a pair of star-shaped gate or star rotors **16, 18** mounted for rotation in the housing **12** and engaged with the main rotor **14.**

The compressor housing **12** includes a cylindrical bore (not shown) in which the main rotor **14** is rotatably mounted. The bore is open at its suction end **27** and is closed by a discharge end wall (not shown). The main rotor **14,** which is generally cylindrical and has a plurality of helical grooves **25** formed therein defining compression chambers, is provided with a rotor shaft **26** which is rotatably supported at opposite ends on bearing assemblies **28** mounted on the housing **12.** The rotor shaft **26** drives rotation of the main rotor **14** about a main rotor shaft axis.

The compressor housing **12** includes spaces **30** therein in which the star or gate rotors **16, 18** are rotatably mounted and the rotors **16, 18** are located on opposite sides (i.e., 180 degrees apart) of the main rotor **14.** Each of the rotors **16, 18** has a plurality of gear teeth **32 and** is provided with a rotor shaft **34** which is rotatably supported at opposite ends on bearing assemblies mounted on the housing. Each of the rotors **16, 18** successively engages a groove **25** in the main rotor **14** as the latter is rotatably driven by a motor (not shown) and, in cooperation with the wall of the bore (not shown) and specifically its end wall (not shown), defines a gas compression chamber.

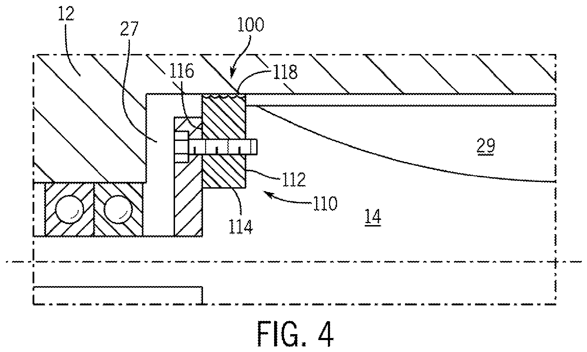

FIG. 4 is a schematic illustration of a portion of the single screw compressor of FIG. 3. Specifically, FIG. 4 shows a portion of the suction end cavity **27** with the main rotor **14** and housing **12** forming a discharge cavity **29.** A seal assembly **100** is provided between the suction end cavity **27** and the discharge cavity **29.** As will be appreciated in view of the description above in relation to FIG. 3, the suction end cavity **27** is generally a low-pressure cavity, with pressure in the suction end cavity **27** being around 2068 hPa (30 psi) in standard operating conditions. Compression of gases results in a high pressure in the discharge cavity **29.** In standard single screw compressors, the pressure in the discharge cavity **29** is around 10342-20684 hPa (150-300 psi). However, in the high-pressure single screw compressors of the present disclosure, pressures in the discharge cavity **29** range from 24123 hPa (350 psi) to 137897 hPa (2000 psi). In the embodiment shown, the pressure in the discharge cavity **29** is from 24132 hPa (350 psi), or 27579 hPa (400 psi), or 34474 hPa (500 psi), or 51711 hPa (750 psi) to 55159 hPa (800 psi), or 68948 hPa (1000 psi), or 82738 hPa (1200 psi), or 103422 hPa (1500 psi), or 137897 hPa (2000 psi).

In an embodiment not according to the invention, the difference in pressure between the suction end cavity **27** and the discharge cavity **29** is greater than or equal to 10342 hPa (150 psi), or greater than or equal to 13790 hPa (200 psi), or greater than or equal to 17237 hPa (250 psi), or greater than or equal to 20684 hPa (300 psi), or greater than or equal to 24132 hPa (350 psi), or greater than or equal to 27579 hPa (400 psi), or greater than or equal to 31027 hPa (450 psi), or greater than or equal to 34474 hPa (500 psi), or greater than or equal to 37922 hPa (550 psi). In an embodiment according to the invention the difference in pressure between the suction end cavity **27** and the discharge cavity **29** is greater than or equal to 41369 hPa (600 psi).

In an embodiment, the difference in pressure between the suction end cavity **27** and the discharge cavity **29 is** up to 41369 hPa (600 psi), or 48264 hPa (700 psi), or 55159 hPa (800 psi), or 62053 hPa (900 psi), or 68948 hPa (1000 psi), or 86185 hPa (1250 psi), or 103422 hPa (1500 psi), or 120660 hPa (1750 psi), or 137897 hPa (2000 psi).

In contrast to the prior art seal shown in PRIOR ART FIG. 1, the seal assembly **100** is not machined directly to the main rotor **14.** Further, in contrast to the prior art seal shown in and PRIOR ART FIG. **2****,** the seal assembly **100** is not an independent component fixedly attached to the interior of the housing **12.** Rather, the seal assembly **100** in accordance with embodiments of the present disclosure is an independent component fixedly attached to the main rotor **14.**

As shown in FIG. 4, the seal assembly **100 is** composed of a seal body **110** fixedly attached to the main rotor **14** using one or more attachment structures **130.** Specifically, in the embodiment shown, the seal body **110** is disposed around at least a portion of the circumference of the main rotor **14,** and preferably around substantially the entirety of the main rotor **14.** That is, in an embodiment, the seal body **110** is arcuate, and preferably disc-shaped to substantially or completely surround a circumference of the main rotor **14.**

Further, in the embodiment shown in FIG. 4, a cross-section of the seal body **110 is** generally rectangular. In an embodiment, the seal body **110** has a consistent cross-sectional geometry along the length of the seal body **110.**

When viewed in cross-section as in FIG. 4, the side surfaces **112, 116** and inner surface **114** which abuts the main rotor **14** are generally smooth, while the outer surface **118** which faces the interior of the main housing **12** is textured to create a labyrinthine path from the suction end cavity **27** to the discharge cavity **29** between the seal body **110** and the housing **12.** In the embodiment shown, the labyrinthine path on the outer surface **118** of the seal body **110** is formed by a plurality of grooves of approximately the same depth along the arcuate outer surface **118** of the seal body **110.** The grooves are evenly spaced along the outer surface **118.** It will be appreciated that in further embodiments, the labyrinthine path may be formed using any surface texture which accomplishes the creation of the labyrinthine path, including, for example, and not limited to, grooves, teeth, channels, serpentine channels, bumps, stippling, and combinations thereof, any or all of which may be consistently, symmetrically or evenly spaced or positioned along the outer surface **118,** and any or all of which may have the same or different height or depth from or into the seal body **110.**

As mentioned above, in the embodiment shown, the seal body **110** entirely surrounds the main rotor **14** at a circumferences of the main rotor 14. In other words, in the embodiment shown in FIG. 4, the seal body **110** is generally ring-shaped or disc-shaped having an outer diameter and an inner diameter. The thickness of the seal body **110** is consistent across all of the seal body **110.**

Importantly, the seal body **110 is** not made of metal. Rather, the seal body **110** is made of a resin material, and more preferably a thermoplastic material or thermoset material. As used herein, the term "thermoplastic material" refers to a polymer or resin which once set in solid form, can again become pliable or moldable upon application of heat. As used herein, the term "thermoset material" refers to a polymer or resin which, once set in a solid form, does not again become pliable or moldable upon the application of heat. In other words, thermoplastic materials can be re-melted and r e-formed several time, while thermoset materials once formed cannot be again melted and re-formed - they are permanently in the set form. In a particular embodiment, the thermoplastic material or thermoset material is a polyphenylene sulfide resin.

Further, in an embodiment, the thermoplastic or thermoset material is carbon or glass reinforced. That is, the thermoplastic or thermoset material contains carbon fibers, including woven carbon fibers, or glass fibers. In a particular embodiment, the therm
oplastic or thermoset material comprises from 10%, or 15%, or 20%, or 25%, or 30%, or 40% or 50%, or 60% based on the total weight of the thermoplastic or thermoset material.

In an embodiment, the thermoplastic or thermoset material is a thermoplastic material having from 20%, or 30% to 40%, or 50% woven carbon fibers or glass fibers, based on the total weight of the thermoplastic material. In a further embodiment, the thermoplastic material is a polyphenylene sulfide resin having from 20%, or 30% to 40%, or 50% woven carbon fibers or glass fibers.

In an embodiment, the thermoplastic or thermoset material having carbon or glass fibers has a specific gravity from 1.25 g/cm³, or 1.30 g/cm³, or 1.35 g/cm³, or 1.40 g/cm³, or 1.45 g/cm³, or 1.50 g/cm³ to 1.55 g/cm³, or 1.60 g/cm³, or 1.65 g/cm³, or 1.70 g/cm³, or 1.75 g/cm³, as measured in accordance with ASTM D792. In an embodiment, the thermoplastic of thermoset material having carbon or glass fibers has a specific gravity from 1.45 g/cm³, or 1.50 g/cm³ to 1.55 g/cm³, or 1.60 g/cm³, or 1.65 g/cm³, or 1.70 g/cm³.

In an embodiment, the thermoplastic of thermoset material having carbon or glass fibers has a tensile strength from 90 MPa, or 95 MPa, or 100 MPa, or 110 MPa, or 120 MPa to 130 MPa, or 140 MPa, or 150 MPa, or 160 MPa, or 170 MPa, or 175 MPa, as measured in accordance with ISO 527.

In another embodiment, the thermoplastic or thermoset material having carbon or glass fibers has a tensile strength from 103 MPa (15 kpsi), or 124 MPa (18 kspi), or 138 MPa (20 kpsi), or 152 MPa (22 kpsi) to 172 MPa (25 kpsi), or 186 MPa (27 kpsi), or 207 MPa (30 kpsi), or 241 MPa (35 kpsi), as measured in accordance with ASTM D638.

In another embodiment, the thermoplastic or thermoset material having carbon or glass fibers has a tensile strength (90°) from 550 MPa, or 600 MPa, or 625 MPa, or 650 MPa to 675 MPa, or 700 MPa, or 725 MPa, or 750 MPa, or 775 MPa, or 800 MPa, or 850 MPa, or 900 MPa, as measured at 20°C, or 23°C (50% relative humidity), or 80°C.

In an embodiment, the thermoplastic or thermoset material having carbon or glass fibers has a glass transition temperature from 80°C, or 90°, or 100°C to 110°C, or 120° C, or 130°C.

In an embodiment, the thermoplastic or thermoset material having carbon or glass fibers has a melting temperature from 250°C, or 260°C, or 270°, or 280°C to 290°, or 300°C, or 310°C, or 320°C, or 330°C, or 350°C.

In an embodiment, the thermoplastic or thermoset material has one, some or all of the following properties: i) from 20%, or 30% to 40%, or 50% woven carbon fibers or glass fibers; and/or ii) a specific gravity from 1.45 g/cm³, or 1.50 g/cm³ to 1.55 g/cm³, or 1.60 g/cm³, or 1.65 g/cm³, or 1.70 g/cm³; and/or iii) a tensile strength from 90 MPa, or 95 MPa, or 100 MPa, or 110 MPa, or 120 MPa to 130 MPa, or 140 MPa, or 150 MPa, or 160 MPa, or 170 MPa, or 175 MPa, as measured in accordance with ISO 527; and/or iv) a tensile strength from 103 MPa (15 kpsi), or 124 MPa (18 kspi), or 138 MPa (20 kpsi), or 152 MPa (22 kpsi) to 172 MPa (25 kpsi), or 186 MPa (27 kpsi), or 207 MPa (30 kpsi), or 241 MPa (35 kpsi), as measured in accordance with ASTM D638; and/or v) a glass transition temperature from 80°C, or 90°, or 100°C to 110°C, or 120°C, or 130°C; and/or vi) a melting temperature from 250°C, or 260°C, or 270°, or 280°C to 290°, or 300°C, or 310°C, or 320°C, or 330°C, or 350°C.

In an embodiment, the thermoplastic or thermoset material has at least one, at least two, at least three, at least four, at least five, or all six of properties (i)-(vi).

As used herein, the term "attachment structures" refers to hardware components, assemblies and/or adhesive compounds which can be used to fixedly attach the seal body **110** to the main rotor **14.** In the embodiment provided in FIG. **4****,** the one or more attachment structures **130** is a screw which passes through the seal body **110** and extending partially into the main rotor **14.** However, in further embodiments, the one or more attachment structures may include, and is not limited to, screws, bolts, clips, adhesives, welds, and combinations of these and other structures or assemblies.

As further shown in FIG. 4, and in accordance with embodiments of the present disclosure, the seal body **110** is shown as attached to and partially set into the rotor **14.** That is, in the embodiment shown, the seal body **110** itself makes up a portion of the rotor **14** near the edge of the rotor **14** nearest the suction end cavity **27.** In further embodiments, the seal body **110** may be connected to a surface of the rotor **14** so as to extend away from the rotor **14** or, in further embodiments, set entirely into the rotor **14** (i.e., such that material of the rotor is in contact with both arcuate sides **112** and **116** of the seal body **110.**

It will be appreciated that, because the seal body **110** is fixedly attached with the rotor **14,** the high pressure seal assembly **100** will rotate with the rotor **14.** Because the seal body **110** is made of a thermoplastic or thermoset material, the material will wear against the metal housing **12** if in contact with the housing. The clearance, or space, between the housing **12** and the seal body **110,** and particularly the outer surface **118** of the seal body **110,** can therefore be optimized. In particular, in an embodiment, the distance between the outer surface **118** of the seal body **110** and the inner surface of the housing **12** is from 0 µm, or greater than 0 µm, or 0.01 µm, or 0.05 µm, or 0.1 µm, or 0.5 µm, or 1.0 µm, or 5.0 µm to 10 µm, or 25 µm, or 50 µm, or 100 µm, or 250 µm, or 500 µm, or 1000 µm.

It is specifically intended that the present invention not be limited to the embodiments and illustrations contained herein, but include modified forms of those embodiments including portions of the embodiments and combinations of elements of different embodiments as come within the scope of the following claims.

## Claims

1. A high pressure single screw compressor comprising:
a housing (12);
a main rotor (14) that is secured within the housing (12) and rotatably driven by a main rotor drive shaft (26) about a main rotor drive shaft axis, and operably engaged with a plurality of gate rotors (16, 18) that are also secured within the compressor housing (12);
a suction end cavity (27) having a first pressure;
a discharge cavity (29) having a second pressure, wherein the discharge cavity (29) is formed with the main rotor (14) and the compressor housing (12), the second pressure of the discharge cavity (29) is a result of the compression of gases by the high pressure single screw compressor, and the first pressure is less than the second pressure; and
a seal assembly (100) including a seal body (110) having a textured outer surface (118), the seal body (110) being disposed around substantially an entirety of a circumference of the main rotor (14), and at least one attachment structure (130) which fixedly attaches the seal body (110) to, so as to be rotatable along with, the main rotor (14), **characterised in that**
the seal body (110) is provided between the suction end
cavity (27) and the discharge cavity (29), wherein a difference in pressure between the suction end cavity (27) and the discharge cavity (29) is greater than or equal to 41369 hPa (600 psi), and
wherein the seal body (110) is made of a thermoplastic or thermoset material;
wherein the textured outer surface (118) creates a labyrinthine path from the suction end cavity (27) to the discharge cavity (29) between the compressor housing (12) and the main rotor (14).

2. The high pressure single screw compressor of claim 1, wherein the seal body (110) has a rectangular cross-section.

3. The high pressure single screw compressor of any of claims 1-2, wherein the seal body (110) is disc-shaped.

4. The high pressure single screw compressor of any of claims 1-3, wherein the seal body (110) is made of a carbon fiber or glass fiber reinforced thermoplastic or thermoset material.

5. The high pressure single screw compressor of any of claims 1-4, wherein the seal body (110) is made of polyphenylene sulfide.

6. The high pressure single screw compressor of any of claims 1-5, wherein the textured outer surface (118) comprises a plurality of spaced apart grooves.

## Patentansprüche

1. Ein Hochdruck-Einschraubenverdichter, der Folgendes beinhaltet:
ein Gehäuse (12);
einen Hauptrotor (14), der innerhalb des Gehäuses (12) angebracht ist und durch eine Hauptrotorantriebswelle (26) um eine Hauptrotorantriebswellenachse drehbar angetrieben wird und mit einer Vielzahl von Zahnrotoren *(gate rotors)* (16, 18), die ebenfalls innerhalb des Verdichtergehäuses (12) angebracht sind, in Wirkeingriff steht;
einen Saugendhohlraum (27), der einen ersten Druck aufweist;
einen Auslasshohlraum (29), der einen zweiten Druck aufweist, wobei der Auslasshohlraum (29) mit dem Hauptrotor (14) und dem Verdichtergehäuse (12) ausgebildet ist, der zweite Druck des Auslasshohlraums (29) ein Ergebnis der Verdichtung von Gasen durch den Hochdruck-Einschraubenverdichter ist und der erste Druck geringer als der zweite Druck ist; und
eine Dichtungsanordnung (100), die Folgendes umfasst: einen Dichtungskörper (110), der eine strukturierte Außenfläche (118) aufweist, wobei der Dichtungskörper (110) um im Wesentlichen einen gesamten Umfang des Hauptrotors (14) angeordnet ist, und
mindestens eine Befestigungsstruktur (130), die den Dichtungskörper (110) fest an dem Hauptrotor (14) befestigt, um zusammen mit diesem drehbar zu sein, **dadurch gekennzeichnet, dass**
der Dichtungskörper (110) zwischen dem Saugendhohlraum (27) und dem Auslasshohlraum (29) vorgesehen ist, wobei eine Druckdifferenz zwischen dem Saugendhohlraum (27) und dem Auslasshohlraum (29) größer als oder gleich 41369 hPa (600 psi) ist, und
wobei der Dichtungskörper (110) aus einem thermoplastischen oder duroplastischen Material hergestellt ist;
wobei die strukturierte Außenfläche (118) einen labyrinthartigen Pfad von dem Saugendhohlraum (27) zu dem Auslasshohlraum (29) zwischen dem Verdichtergehäuse (12) und dem Hauptrotor (14) erzeugt.

2. Hochdruck-Einschraubenverdichter gemäß Anspruch 1, wobei der Dichtungskörper (110) einen rechteckigen Querschnitt aufweist.

3. Hochdruck-Einschraubenverdichter gemäß einem der Ansprüche 1-2, wobei der Dichtungskörper (110) scheibenförmig ist.

4. Hochdruck-Einschraubenverdichter gemäß einem der Ansprüche 1-3, wobei der Dichtungskörper (110) aus einem kohlenstofffaser- oder glasfaserverstärkten thermoplastischen oder duroplastischen Material hergestellt ist.

5. Hochdruck-Einschraubenverdichter gemäß einem der Ansprüche 1-4, wobei der Dichtungskörper (110) aus Polyphenylensulfid hergestellt ist.

6. Hochdruck-Einschraubenverdichter gemäß einem der Ansprüche 1-5, wobei die strukturierte Außenfläche (118) eine Vielzahl von beabstandeten Rillen beinhaltet.

## Revendications

1. Un compresseur monovis à haute pression comprenant :
un carter (12) ;
un rotor principal (14) qui est assujetti à l'intérieur du carter (12) et entraîné en rotation par un arbre d'entraînement (26) de rotor principal autour d'un axe d'arbre d'entraînement de rotor principal, et en prise fonctionnelle avec une pluralité de rotors satellites (16, 18) qui sont également assujettis à l'intérieur du carter de compresseur (12) ;
une cavité d'extrémité d'aspiration (27) ayant une première pression ;
une cavité de refoulement (29) ayant une deuxième pression, où la cavité de refoulement (29) est formée avec le rotor principal (14) et le carter de compresseur (12), la deuxième pression de la cavité de refoulement (29) résulte de la compression de gaz par le compresseur monovis à haute pression, et la première pression est inférieure à la deuxième pression ; et
un ensemble d'étanchéité (100) incluant un corps d'étanchéité (110) ayant une surface extérieure texturée (118), le corps d'étanchéité (110) étant disposé autour de substantiellement la totalité d'une circonférence du rotor principal (14), et au moins une structure d'attache (130) qui attache fixement le corps d'étanchéité (110) au rotor principal (14), de manière à pouvoir tourner avec celui-ci, **caractérisé en ce que** le corps d'étanchéité (110) est prévu entre la cavité d'extrémité d'aspiration (27) et la cavité de refoulement (29), où une différence de pression entre la cavité d'extrémité d'aspiration (27) et la cavité de refoulement (29) est supérieure ou égale à 41 369 hPa (600 psi), et
où le corps d'étanchéité (110) est réalisé en un matériau thermoplastique ou thermodurcissable ;
où la surface extérieure texturée (118) crée un trajet en labyrinthe de la cavité d'extrémité d'aspiration (27) à la cavité de refoulement (29) entre le carter de compresseur (12) et le rotor principal (14).

2. Le compresseur monovis à haute pression de la revendication 1, où le corps d'étanchéité (110) a une section transversale rectangulaire.

3. Le compresseur monovis à haute pression de n'importe lesquelles des revendications 1 à 2, où le corps d'étanchéité (110) est en forme de disque.

4. Le compresseur monovis à haute pression de n'importe lesquelles des revendications 1 à 3, où le corps d'étanchéité (110) est réalisé en un matériau thermoplastique ou thermodurcissable renforcé de fibre de carbone ou de fibre de verre.

5. Le compresseur monovis à haute pression de n'importe lesquelles des revendications 1 à 4, où le corps d'étanchéité (110) est réalisé en sulfure de polyphénylène.

6. Le compresseur monovis à haute pression de n'importe lesquelles des revendications 1 à 5, où la surface extérieure texturée (118) comprend une pluralité de rainures espacées les unes des autres.
